# EUROPEAN PATENT SPECIFICATION

(11) **EP 3 594 440 B1**
(45) Date of publication and mention of the grant of the patent: **26.10.2022**
(21) Application number: 19185030.4
(22) Date of filing: 08.07.2019
(51) Int. Cl.: E06B 9/40, A01G 9/22

(54) **SCREEN SYSTEM AND BUILDING**
SCHIRMSYSTEM UND GEBÄUDE
SYSTÈME D'ÉCRAN ET BÂTIMENT

(30) Priority: 06.07.2018 NL 2021263
(43) Date of publication of application: 15.01.2020
(73) Proprietor: Verzuu Beheer B.V., 8071 RA Nunspeet (NL)
(72) Inventor: Verzuu, Daniel Jacobus Hendrikus Gabriel, 8071 RA Nunspeet (NL)
(74) Representative: Jacobs, Bart

(56) References cited:
- EP-A1- 0 860 578
- EP-A1- 1 974 107
- DE-A1- 3 728 913
- DE-U1-202006 004 615
- DE-U1-202007 009 563

## Description

The present invention relates to a screen system. Furthermore, the invention relates to a building provided with such a screen system. The screen system is suitable for shielding, for example, light and/or heat. More specifically, the invention relates to a screen system intended for greenhouse horticulture. The invention also pertains to a building used for greenhouse horticulture, as well as a greenhouse in which the screen system is installed.

In greenhouse horticulture, attention is paid to providing the ideal growth environment for, for example, a monoculture of plants. Offering the right amount of heat and light to all individual plants is an important part of this. This right amount of heat is characterized not only by the desired amount of heat, but also by offering it as evenly as possible so that all individual plants undergo a similar development.

In view of the increasing number of working environments in greenhouse horticulture, such as greenhouses, the efficiency and sustainability of a screen system is becoming increasingly important for growers and investors.

Known in the art is the screen system disclosed in EP 0 860 578 A1, comprising a number of tension rollers, each having its free ends movably bearing-mounted in two lateral guides and each being rotatable around the longitudinal center line of the relevant tension roller. Each tension roller comprises a tension spring, and the tension rollers are interconnected by screen cloth parts. The tension springs in the tension rollers are biased such that the screen tends to assume a rolled-in condition and is extendible against the bias of the tension springs.

Known in the art is the device disclosed in DE 3728913 A1, which is for a broad web awning, in which the awning cloth is divided up into part-webs and in each case two part-webs or part-web portions are assigned to a particular cloth roller, which for their part are capable of travelling in longitudinal rails.

Known in the art is a slat, folding window blind, or extendable awning disclosed in DE 20 2007 009563 U1, which fulfills a shading function of 100% and can produce at the same time electricity or heat for a building.

Known in the art is the sunshade assembly disclosed in DE 20 2006 004615 U1, which has at least one shade canopy supported on the ground by three spaced vertical rods and a canopy winding roller rotating between two rods. The free ends of the canopies are secured to other rods. The winding shaft is powered by a motor with an external control and control buttons and also a remote control. The assembly is fitted with a wind and light sensor.

Known in the art are the winding method and structure disclosed in WO 2007/083328. The document discloses a method for unwinding/winding a laminar sheet arranged so as to cover an area and forming part of a winding structure, which comprises a supporting structure associated with the area and including a cylinder for supporting said laminar sheet that identifies a first longitudinal axis of rotation, drive means for rotating the cylinder around the first longitudinal axis and elastic means cooperating mechanically with the drive means during the unwinding/winding of the laminar sheet. The unwinding of the laminar sheet from the cylinder is due to the effect of the rotation of the cylinder induced by the drive means, while the winding of the laminar sheet onto the cylinder is due to the effect of the recovery of the mechanical energy stored by the elastic means during the unwinding of the laminar sheet.

Further types of screen systems that are known from the most recent technology include a variety of screens characterized by the properties that contribute to the aforementioned goal, namely the percentage of heat they allow to pass through and the amount of heat they shield. The screen systems also include a variety of cables that are used to move the screens and/or keep them in place.

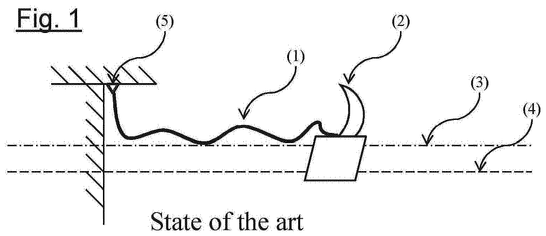

Figure 1 shows an installation based on the most recent technology. The system consists of a screen 1 attached on one side to a stationary point 5, for example a beam or lattice or other kind of stationary part of a building, and on the other side to a screen 2. Carrier 2 can be moved vis-à-vis a stationary support cable 3, on which screen 1 rests. The surface of screen 1 can be adjusted by setting in motion a pulling cable 4, which runs under support cable 3, and which is attached to carrier 2. For this purpose, the familiar system includes a motor for moving pulling cable 4 and a control unit for controlling the motor for the complete unfolding or complete retraction of screen 1.

When adjusting screen 1, it is pulled by carrier 2 over support cable 3 to a desired location. To prevent wear of screen 1 due to the friction between support cable 3 and screen 1, the material type of support cable 3 is carefully selected. These properties are incompatible with the properties for pulling cable 4, which are aimed in particular at being able to transfer tensile forces.

Despite the separate use of support cables 3 and pulling cables 4, usually 1 pulling cable per 5 support cables, there is still relatively a lot of wear and tear on the aforementioned screen system. A further disadvantage of the common screen system is that the use of a separate cable for each required function (drive and support) means that two different cable networks have to be stretched over the entire length of the building. This results in a complex, maintenance-sensitive and costly installation.

One of the aims of the present invention is to provide a screen system in which the above-mentioned disadvantages do not or hardly occur.

This objective is achieved by means of the screen system as defined in accompanying claim 1, wherein it comprises a control unit equipped to control the first motor and the second motor independently of each other, and configured to control the first and second motors such that the screen system is operational in at least two of the following three operating modes: an effective length of the screen remains constant, whereas the screen moves translationally, the effective length of the screen varies, whereas the screen does not move translationally, or the effective length of the screen varies, and the screen moves translationally. In this way, the light can be shielded more evenly and as required. Because the position of the sun changes during the day, a moving screen can be used to compensate for this change. However, if the light distribution is homogenous, it is still possible to control the effective screen over time by moving the screen, which has been at least partially opened.

The screen may comprise a first screen part and a second screen part connected to each other by means of a torsion tube, wherein the torsion tube is configured to rotate so as to roll the first and second screen parts onto the torsion tube and to keep it taut.

With the common screen system, there is relatively lots of friction between the stationary support cable and the sometimes-moving screen. By replacing the usual screen by two screen parts which are connected by a torsion tube, a screen system is realized in which the screen parts are tightly stretched. This reduces the mutual movement between the screen and the cable on which it rests. This allows for omitting the support cable and lets the screen rest directly on the pulling cable while the risk of screen damage remains limited.

In the screen system according to the invention, the first screen part and the second screen part can be rolled up simultaneously and on top of each other. This makes it possible that, despite the separation of the screen, a single roll-up location and roll-up movement are sufficient to roll up the screen. In order to make this possible, the screen system can include a torsion spring for placing the rotating movement of the torsion tube under spring tension. When using a torsion spring, the torsion tube does not require an electrical connection as would be necessary if an internal motor were used.

A first end of the torsion spring can be connected to the torsion tube and a second end of the torsion spring can be connected to a rotation-fixed second attachment point. This attachment as well as the orientation of the torsion spring determines the direction of rotation in which the torsion tube will rotate.

In a preferred embodiment, the rotation-fixed second attachment point includes a fixed guide member in relation to which or into which the second end of the torsion spring can only move translationally. This movement of the torsion tube allows the torsion tube to move with the enlargement and/or reduction of the effective surface area of the screen.

In an embodiment, the first screen part is connected at a first end thereof to the first attachment point and is connected at a second end thereof to the torsion tube. The second screen part is connected at a first end to the torsion tube and at a second end to a first movable pulling cable. Preferably, the first screen part is wrapped around the torsion tube at a side of the torsion tube facing away from the first movable pulling cable and the second screen part is wrapped around the torsion tube at a side of the torsion tube facing towards the first movable pulling cable. In this way, the first screen part is held above the pulling cable moving underneath the screen part. The second screen part can be directly supported by the pulling cable that moves with this screen part. Because the second screen part does not move much, if at all, compared to the first movable pulling cable, there is little or no wear as a result of friction.

The first movable pulling cable can be set in motion by the first motor that is controlled by the control unit. With this first motor and control unit, the effective surface area of the screen can be increased or decreased with the result that the plants in the greenhouse can be shielded as needed.

The screen system also includes a second movable pulling cable, with the first attachment point connected to the second movable pulling cable. The function of this second pulling cable is that the first attachment point can be set in motion. A second motor is used to set in motion the second movable pulling cable and thus the first attachment point, which is also controlled by the control unit. A further function of the second movable pulling cable is to prevent the screen parts from blowing upwards as a result of air flow, such as, the wind when the greenhouse is partially open.

In the aforementioned common system, the screen is attached on one side to a stationary point. This means that in the immediate vicinity of this point there is always a shadow on the plants at the same spot. This makes it difficult to distribute the light evenly across the plants. The screen system of the present invention makes it possible to move the screen so that the position of the screen can be adjusted during the day or other time interval in such a way that each plant has experienced a mainly equal time-average exposure. An alternative aspect made possible by this improved mobility is that a screen system equipped with a screen with a characteristic heat reduction, for example 60%, can be configured according to an effective surface area and a periodic displacement, so that the screen can function as a screen with a lower heat reduction, for example between 0 and 60%.

A variety of screens, each as defined above, can be attached to a first or a second movable pulling cable. This allows for a system in which several screens or screen parts are moved by means of a single pulling cable.

The first and/or second movable pulling cable may be part of a host of first and/or second pulling cables, respectively, which are arranged in parallel. A screen part may be connected to one or more first and/or second moving pulling cables. In addition, several screen parts can be placed next to each other. In a preferred embodiment, several screens are placed one after the other and next to each other, which are operated by the host of first and/or second pulling cables.

In the screen systems described above, the first or second movable pulling cable may be attached to or around a first movable coil by a first end and attached to or around a second movable coil by a second end. In this case, the first and/or second movable coil, triggered by one or the first or second motor, can run synchronously. A single motor can be used, which rotates the first and second movable coils synchronously by means of a mechanical transmission. It is also possible to use a separate motor for each movable coil. Here, too, the coils rotate synchronously.

The first and/or second screen part may include a photovoltaic cell, with which solar energy can be generated.

The screen system is especially designed to be used in a building, such as a greenhouse, wherein it can be used in the immediate vicinity of one or more light-permeable openings, such as windows, to control the amount of light entering the building through one or more light-permeable openings.

In the following section, the invention is further discussed on the basis of the attached figures in which:
Figure 1 shows a common screen system;
Figure 2A shows a side view of an embodiment, wherein the first attachment point is fixed to a stationary point;
Figure 2B shows a side view of an embodiment, wherein the first attachment point is attached to a second movable pulling cable;
Figure 2C shows a side view of an embodiment in which a number of screens are attached to a first and second moving pulling cable;
Figure 3A shows a perspective view of a first and second screen part interconnected by a torsion tube and figure 3B shows a detailed view of the torsion tube;
Figure 4A shows a schematic side view of a further embodiment of the screen system in which a first and second movable pulling cable are looped around a first or second movable coil;
Figure 4B shows a diagrammatic side view of a further embodiment of the screen system in which a first or second movable pulling cable are looped around a first and a second movable coil;
Figure 4C shows an embodiment, wherein the screen system is placed in a user environment for greenhouse horticulture;
Figure 5 shows a top view of an embodiment in which several screens and several first and second movable pulling cables are arranged.

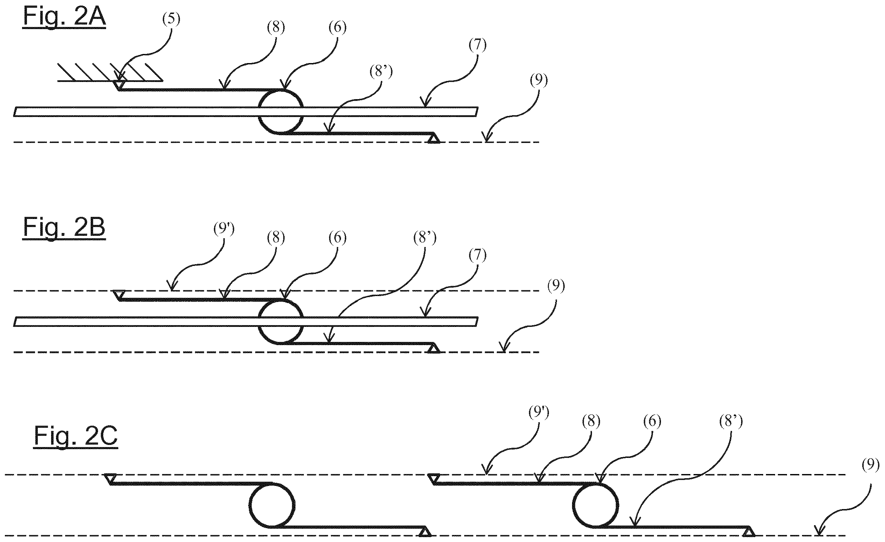

Figure 2A shows, for example, a side view of an embodiment of a screen system according to the invention. Here, a first screen part 8 is attached with one end to a stationary first attachment point 5 and with a second end to a torsion tube 6. In addition, a second screen part 8' with a first end is attached to the torsion tube 6 and a second end is attached to a first movable pulling cable 9. It also shows a guide member 7 along which torsion tube 6 can move translationally.

The stationary first attachment point may be a lattice or beam, or any other stationary part of a building in which the screen system is installed.

In figure 2A a first movable pulling cable 9 can be moved in the horizontal direction. By moving the first movable pulling cable 9 to the right, the effective surface area of the screen 8, 8' is increased, which rotates torsion tube 6 counter clockwise and half of the distance covered by the first movable pulling cable 9 moves along the guide member 7. Rotating the first movable pulling cable 9 to the left, assuming that this movement does not attempt to move torsion tube 6 to the left beyond the first attachment point 5, results in a reduction of the effective surface area of the screen, with the torsion tube 6 rotating clockwise. The first screen part 8 and a second screen part 8' will become equally longer or shorter.

It should be noted that, in practice, torsion tube 6 is mainly supported by first pulling cables 9. However, because torsion tube 6 rolls up or down and because this movement corresponds to the movement of the first pulling cables 9, the risk of wear of the screen parts is small to negligible.

As a result of torsion tube 6, screen parts 8, 8' are kept taut. In particular, the first screen part 8 is kept at a distance from the first pulling cable 9 and little to no friction will occur between these parts.

Another consequence of torsion tube 6 is that this second screen part 8' also keeps it taut. However, this screen part can be laid with the first movable pulling cable 9. Because this screen part moves along with the pulling cable, there is little or no mutual movement.

It follows from the division of the screen that at a given displacement of the first movable pulling cable, torsion tube 6 moves in the same direction and moves half of the distance along guide member. It should be noted that the torsion tube is configured to roll up screen parts 8, 8' by pre-tension.

Although first attachment point 5 is attached to a surface in this design, other surfaces are possible as first attachment point 5, such as an angle or a cylinder.

Figure 2B shows a similar side view as in figure 2A. However, in figure 2B, the first attachment point 5 is connected to a second movable pulling cable 9' which can also be moved in the horizontal direction.

Moving first movable pulling cable 9 and second movable pulling cable 9 "to the right or left simultaneously results in screen parts 8,8" moving to the right or left while the effective surface area remains the same. From this also follows that torsion tube 6 moves equally along guide member 7 to the right or left. The simultaneous movement to the left or to the right of the second pulling cable 9' as well as the movement to the opposite direction of the first pulling cable 9 has the result that the effective length of the screen formed by screen parts increases or decreases by 8,8'. In this case, torsion tube 6 does not move.

Figure 2C shows a side view similar to figures 2A and 2B. However, in figure 2C a number of screens are attached to a first pulling cable 9 and to a second pulling cable 9'. The movement of screen parts 8.8', or the enlargement and/or reduction of the effective surface area of the screen formed by these screen parts, is identical for the number of screen parts when they are attached to one and the same first movable pulling cable 9 and/or second movable pulling cable 9'.

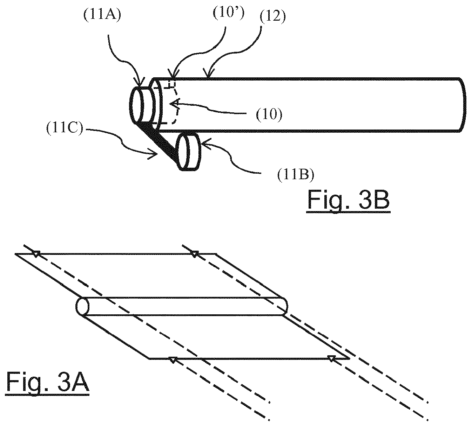

Figure 3A shows a perspective view of screen parts 8, 8' and torsion tube 6. Figure 3B shows a view of torsion tube 6. Torsion tube 6 visibly contains an outer tube 12 and a torsion spring 10. An end 10' of torsion spring 10 is connected to outer tube 12 and another end to a guide member element 11A. A similar guide member element 11B is connected to the guide member element 11A by means of an arm 11C. The guide member elements 11A and 11B can be moved into guide member 7. Guide member 7 can be equipped with a slot or groove into which guide member elements 11A and 11B can only move.

Due to torsion spring 11, the rotational movement of the outer tube 12 is under spring tension compared to the guide member 7. Because guide member element 11A cannot rotate since guide member element 11B is held by arm 11C in guide member 7, torsion tube 6 tends to roll up screen parts 8, 8'. However, this is prevented by first and/or second pulling cable 9, 9' and/or by first stationary attachment point 5 if present.

The demonstrated embodiment does not restrict the possibility of producing a torsion tube with a non-cylindrical shape.

Figure 3B also shows a torsion spring 10 on one side of torsion tube 6. However, due to a symmetrical load, it is preferable to attach a torsion spring on the other side of torsion tube 6 as well.

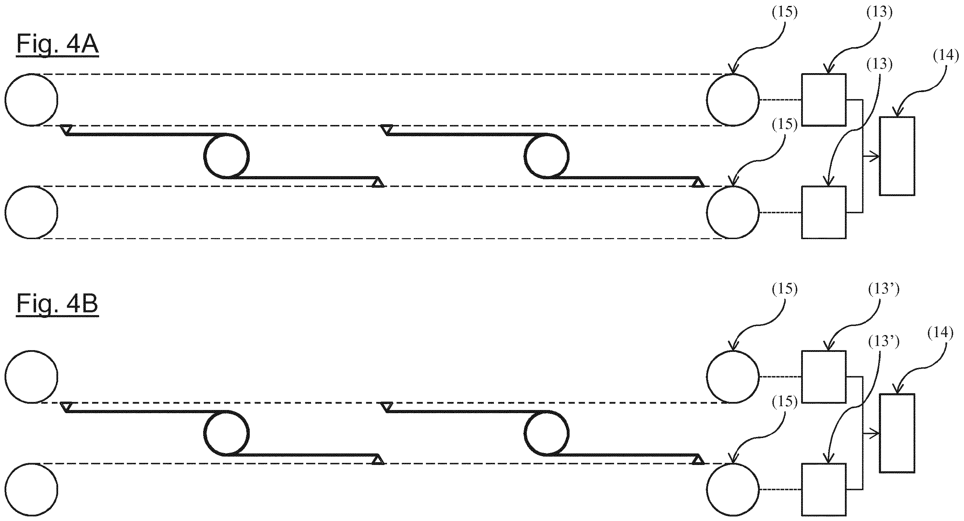

Figure 4A shows a schematic side view of a design of the screen system according to the invention. The first movable pulling cable 9 and the second movable pulling cable 9's are guided around a couple of coils 15 each. At least one of the coils 15 is generated by a motor 13, wherein motors 13 are controlled, each independently, by control unit 14.

In a possible embodiment, a first movable coil 15, coupled with the first movable pulling cable, generated by a first motor 13, a second movable coil 16, coupled with the second movable pulling cable, generated by a second motor 13, and the first and second movable coils are placed 15 crosswise from each other.

Figure 4B shows a diagrammatic side view of a different type of screen system according to the invention. Here, first movable pulling cable 9 and second movable pulling cable 9 'are each attached to a pair of coils 15. At least one of coils 15 is generated by a motor 13, with motors 13 being generated, each independently, by control unit 14. In contrast to figure 4A, it is necessary to generate each of the movable coils 15 in order to allow movement in both directions. For this purpose, motors can be linked to each of the movable coils 15 by means of an unseen mechanical transmission. Each of the movable coils 15 can also be equipped with a motor 13. In these embodiment, unlike figure 4A, pulling cables 9, 9' are winded inverted coils 15. The motors 13 are then each independently controlled by control unit 14.

For both embodiments, the pairs move synchronously in order to prevent the tension in the 9, 9' pulling cables from decreasing. In addition, for both embodiments, the separate control of the motors for the first 9' pulling cable and the second 9' pulling cable also means that the screen is enlarged, reduced or moved.

Figure 4B shows a similar side view as Fig. 4A wherein a first movable coil 15 and a second movable coil are triggered by a first and a second motor system 13' which are controlled by a control unit 14.

This preferred embodiment has the strong advantage that only the first movable pulling cable has to be kept in tension in one direction only. The first and/or a second pulling cable is wound at one end on a movable coil 15. The first and/or the second movable pulling cable is wound at another end on another movable coil. A pulling cable is triggered by a motor system 13'. A movable coil 15 is directly controlled by a first motor as part of the motor system 13' wherein another movable coil may be set in motion by a second motor as part of the motor system 13' or may be set in motion indirectly by mechanical transmission of the first motor as part of the motor system 13'. Another movable coil may be set in motion by a second motor as part of the motor system 13' or may be set in motion indirectly by mechanical transmission of the first motor as part of the motor system 13'.

The control unit 14, capable of controlling a first and second motor system on an individual basis, is capable of turning the screen to the right by moving the movable coils 15 in the opposite direction and releasing other movable coils. It is also able to move the screen to the left by moving the other movable coils in opposite directions and allowing the movable coils 15 to rotate freely.

An embodiment can be provided in which a torsion tube has a length of up to two hundred meters and includes forty tube elements, which have a diameter of sixty millimeters and a length of approximately five meters. The first and second screen parts have an effective length of two and a half meters and are attached every fifty centimeters to a first and possibly second pulling cable. In this case, the structure is hung in a subspace of a greenhouse which is called a section. A greenhouse, for example, can consist of fifteen sections and therefore assumes a width of seventy-five meters.

If this embodiment is equipped with the installation shown in Figure 4A, the first and second movable pulling cables shall each have a length of at least 150 meters. A total of at least one hundred and twenty kilometers of pulling cable shall therefore be installed over the entire greenhouse.

If this type of design is equipped with the installation shown in Figure 4B, the first and second movable pulling cables will each have a length of at least seventy-five meters. For this reason, a total of at least sixty kilometers of pulling cable will be installed over the entire greenhouse.

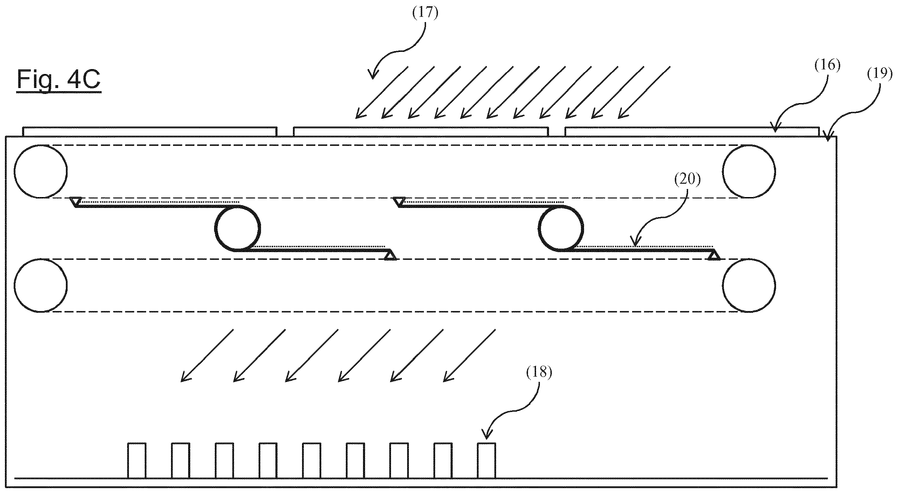

Figure 4C shows a schematic side view in which the screen system is placed in a building 19 that contains light-permeable openings 16 such as windows, in which the screen system shields light 17 from the objects to be screened off 18, for example plants.

The screen system changes the permeation of light 17 by enlarging, reducing or moving the effective surface area of the screen formed by screen parts 8, 8'. The screen system distributes the minimal shadow present proportionally over objects 18 to be screened off by moving the screen in the manner described above.

If screen parts 8, 8' have a certain degree of light permeation, such as 50%, these screen parts 8, 8' can be used to achieve a time average light intensity between 50 and 100% of the maximum available light intensity for essentially any object 18 that is screened. An average of 50% is achieved by fully rolling out the screen, while an average of 100% is achieved by fully rolling up the screen. For the sake of simplicity, the protection of a fully rolled up screen has not been taken into account in this calculation.

However, if screen parts 8, 8' have a light permeation degree of 0%, these screen parts 8, 8' can be used to achieve a time-average and spatially uniform luminous intensity between 0 and 100%.

Because of the fact that these screens are exposed to sunlight, an embodiment option is provided in which the first and second parts of the screen contain a photovoltaic cell. Current photovoltaic cells are known to be relatively rigid and vulnerable. A screen part of an installation, as is known in the technique, is wrinkled with sharp angles and unpredictable shapes. These properties are not necessarily compatible with known installations.

The installation according to this document will keep the first and second screen parts taut, so that they are flat when rolled out. Also, the first and second screen parts are rolled up around a torsion coil so that they do not assume sharp or unexpected angles. This creates an environment in which it is possible to mount flexible photovoltaic cells.

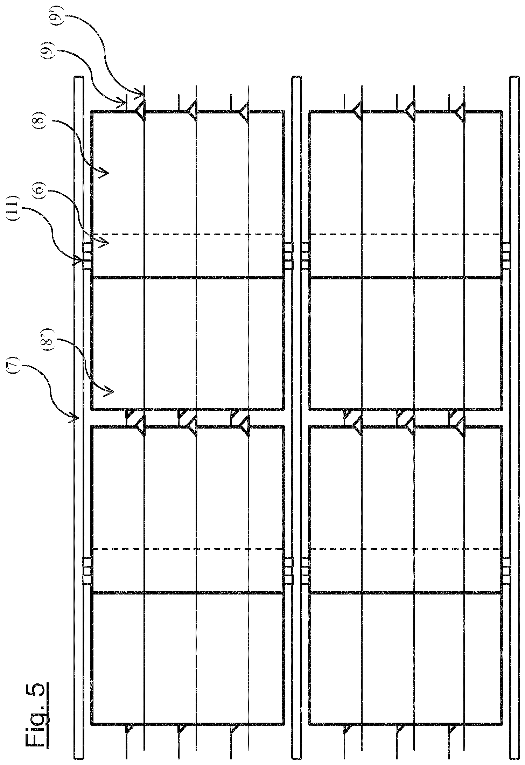

Figure 5 shows a top view of an embodiment of the screen system in which several screens are placed one after the other and next to each other. Each set of screen parts 8, 8' is attached to a torsion tube 6 respectively. Each torsion tube 6 is connected to a guide member 7 and can move translationally in relation to it. A number of screens are attached to a first movable pulling cable 9 and a second movable pulling cable 9'. Each of these cables is part of a number of cables, whereby the number of first pulling cables 9' and the several second pulling cables 9' as a whole can be moved to simultaneously change the effective surface area of each of the screens.

It should be clear to the professional that the present invention is not limited to the designs shown here, but that various modifications are possible without deviating from the scope of protection which is defined by the attached claims.

## Claims

1. Screen system suitable for shielding, for example, light and/or heat, comprising:
a first movable pulling cable (9);
a screen (8, 8') connected at a first end to a first attachment point (5) and at a second end to the first movable pulling cable (9);
a second movable pulling cable (9'), wherein the first attachment point (5) is connected to the second movable pulling cable; and
a first and second motor (13, 13') for moving the first (9) and second movable pulling cable (9'), respectively;
a control unit (14) controlling the first and second motors (13, 13');
**characterized in that** said
control unit (14) is equipped to control the first motor and the second motor (13, 13') independently of each other, and is configured to control the first and second motors (13, 13') such that the screen system is operational in at least two of the following three operating modes:
an effective length of the screen (8, 8') remains constant, whereas the screen (8, 8') moves translationally;
the effective length of the screen (8, 8') varies, whereas the screen (8, 8') does not move translationally;
the effective length of the screen (8, 8') varies, and the screen (8, 8') moves translationally.

2. Screen system according to claim 1, wherein the screen comprises a first screen part (8) and a second screen part (8') which are interconnected by means of a torsion tube (6), wherein the torsion tube (6) is configured to rotate so as to roll the first and second screen parts (8, 8') onto the torsion tube (6) and to keep it taut.

3. Screen system according to claim 2, wherein the first screen part (8) and the second screen part (8') are rolled up simultaneously and one over the other.

4. Screen system according to claim 2 or 3, further comprising a torsion spring for placing the rotating movement of the torsion tube (6) under spring tension.

5. Screen system according to claim 4, wherein a first end of the torsion spring (10) is connected to the torsion tube and wherein a second end of the torsion spring (10) is connected to a rotation-fixed second attachment point.

6. Screen system according to claim 5, wherein the rotation-fixed second attachment point includes a fixed guide member (11A) in relation to which or into which the second end of the torsion spring (10) can only move translationally.

7. Screen system according to any one of claims 2-6, wherein the first screen part (8) is connected at a first end to the first attachment point (5) and at a second end to the torsion tube (10) and wherein the second screen part (8') is connected at a first end to the torsion tube (6) and at a second end to the first movable pulling cable (9).

8. Screen system according to claim 7, wherein the first screen part (8) is wrapped around the torsion tube (6) at a side of the torsion tube (6) facing away from the first movable pulling cable (9) and wherein the second screen part (8') is wrapped around the torsion tube (6) at a side of the torsion tube (6) facing towards the first movable pulling cable (9).

9. Screen system according to any one of claims 2-8, wherein the first and/or the second screen part (8, 8') includes a photovoltaic cell.

10. Screen system according to one of the claims 1-9, wherein a plurality of screens, each as defined in the preceding claims, is attached to a first or a second movable pulling cable (9, 9').

11. Screen system according to one of the claims 1-10, wherein a first and/or a second movable pulling cable (9, 9') is part of a plurality of pulling cables.

12. Screen system according to any of the claims 1-11, wherein a first or a second movable pulling cable (9, 9') is attached with a first end thereof to or around a rotating reel and with a second end thereof to or around a second rotating reel and wherein the first and/or the second rotating reel, set in motion by one of the first and second motors (13, 13'), rotate synchronously.

13. Building (19), such as a greenhouse, comprising:
one or more light-permeable openings (16), such as windows;
the screen system according to any one of claims 1-12 for controlling a quantity of light that passes through the one or more light-permeable openings in the building.

## Patentansprüche

1. Schirmsystem, geeignet zur Abschirmung von z.B. Licht und/oder Wärme, aufweisend:
ein erstes bewegliches Zugseil (9);
einen Schirm (8, 8'), der an einem ersten Ende mit einem ersten Befestigungspunkt (5) und an einem zweiten Ende mit dem ersten beweglichen Zugseil (9) verbunden ist;
ein zweites bewegliches Zugseil (9'), wobei der erste Befestigungspunkt (5) mit dem zweiten beweglichen Zugseil verbunden ist; und
einen ersten und zweiten Motor (13, 13') zum Bewegen des ersten (9) bzw. zweiten beweglichen Zugseils (9');
eine Steuereinheit (14), die den ersten und zweiten Motor (13, 13') steuert,
**dadurch gekennzeichnet, dass**
die Steuereinheit (14) so ausgebildet ist, dass sie den ersten Motor und den zweiten Motor (13, 13') unabhängig voneinander steuert, und so konfiguriert ist, dass sie den ersten und den zweiten Motor (13, 13') so steuert, dass das Schirmsystem in zumindest zwei der folgenden drei Betriebsmodi arbeitet:
translatorische Bewegung des Schirms (8, 8'), während eine effektive Länge des Schirms (8, 8') konstant bleibt;
nicht-translatorische Bewegung des Schirms (8, 8'), während eine effektive Länge des Schirms (8, 8') variiert;
translatorische Bewegung des Schirms (8, 8'), wobei eine effektive Länge des Schirms (8, 8') variiert;

2. Schirmsystem nach Anspruch 1, wobei der Schirm einen ersten Schirmabschnitt (8) und einen zweiten Schirmabschnitt (8') umfasst, die beide mittels eines Torsionsrohrs (6) miteinander verbunden sind, wobei das Torsionsrohr (6) so ausgebildet ist, dass es rotiert, um den ersten und den zweiten Schirmabschnitt (8, 8') auf das Torsionsrohr (6) aufzurollen und straff zu halten.

3. Schirmsystem nach Anspruch 2, wobei der erste Schirmabschnitt (8) und der zweite Schirmabschnitt (8') gleichzeitig und übereinander aufgerollt werden.

4. Schirmsystem nach Anspruch 2 oder 3, ferner aufweisend eine Torsionsfeder, um die Drehbewegung des Torsionsrohrs (6) unter Federspannung zu setzen.

5. Schirmsystem nach Anspruch 4, wobei ein erstes Ende der Torsionsfeder (10) mit dem Torsionsrohr verbunden ist und wobei ein zweites Ende der Torsionsfeder (10) mit einem drehfesten zweiten Befestigungspunkt verbunden ist.

6. Schirmsystem nach Anspruch 5, wobei der drehfeste zweite Befestigungspunkt ein feststehendes Führungselement (11A) aufweist, zu dem oder in das sich das zweite Ende der Torsionsfeder (10) nur translatorisch bewegen kann.

7. Schirmsystem nach einem der Ansprüche 2 bis 6, wobei der erste Schirmabschnitt (8) an einem ersten Ende mit dem ersten Befestigungspunkt (5) und an einem zweiten Ende mit dem Torsionsrohr (10) verbunden ist, und wobei der zweite Schirmabschnitt (8') an einem ersten Ende mit dem Torsionsrohr (6) und an einem zweiten Ende mit dem ersten beweglichen Zugseil (9) verbunden ist.

8. Schirmsystem nach Anspruch 7, wobei der erste Schirmabschnitt (8) um das Torsionsrohr (6) über eine von dem ersten beweglichen Zugseil (9) abgewandten Seite des Torsionsrohrs (6) gewickelt ist, und wobei der zweite Schirmabschnitt (8') um das Torsionsrohr (6) über eine dem ersten beweglichen Zugseil (9) zugewandten Seite des Torsionsrohrs (6) gewickelt ist.

9. Schirmsystem nach einem der Ansprüche 2 bis 8, wobei der erste und/oder der zweite Schirmabschnitt (8, 8') eine photovoltaische Zelle aufweist.

10. Schirmsystem nach einem der Ansprüche 1 bis 9, wobei eine Mehrzahl an Schirmen, jeweils wie in den vorherigen Ansprüchen definiert, an einem ersten oder einem zweiten beweglichen Zugseil (9, 9') befestigt ist.

11. Schirmsystem nach einem der Ansprüche 1 bis 10, wobei ein erstes und/oder ein zweites bewegliches Zugseil (9, 9') Teil einer Mehrzahl an Zugseilen ist.

12. Schirmsystem nach einem der Ansprüche 1 bis 11, wobei ein erstes oder ein zweites bewegliches Zugseil (9, 9') mit einem ersten Ende an oder um eine erste rotierende Trommel und mit einem zweiten Ende an oder um eine zweite rotierende Trommel befestigt ist, und wobei die erste und/oder die zweite rotierende Trommel, welche von einem der ersten und zweiten Motoren (13, 13') in Bewegung gesetzt werden, synchron rotieren.

13. Gebäude (19), wie z.B. ein Gewächshaus, aufweisend:
eine oder mehrere lichtdurchlässige Öffnungen (16), wie z.B. Fenster;
das Schirmsystem nach einem der Ansprüche 1 bis 12 zur Regelung der Lichtmenge, die durch die eine oder die mehreren lichtdurchlässigen Öffnungen in das Gebäude gelangt.

## Revendications

1. Système d'écran approprié pour protéger, par exemple, de la lumière et/ou de la chaleur, comprenant :
un premier câble de traction mobile (9) ;
un écran (8, 8') connecté à une première extrémité à un premier point de fixation (5) et à une seconde extrémité au premier câble de traction mobile (9) ;
un second câble de traction mobile (9'), dans lequel le premier point de fixation (5) est connecté au second câble de traction mobile ; et
des premier et second moteurs (13, 13') pour déplacer les premier (9) et second (9') câbles de traction mobile, respectivement ;
une unité de commande (14) commandant les premier et second moteurs (13, 13') ;
**caractérisé en ce que** ladite unité de commande (14) est équipée pour commander le premier moteur et le second moteur (13, 13') indépendamment l'un de l'autre, et est configurée pour commander les premier et second moteurs (13, 13') de sorte que le système d'écran soit opérationnel dans au moins deux des trois modes de fonctionnement suivants :
une longueur effective de l'écran (8, 8') reste constante, tandis que l'écran (8, 8') se déplace en translation ;
la longueur effective de l'écran (8, 8') varie, tandis que l'écran (8, 8') ne se déplace pas en translation ;
la longueur effective de l'écran (8, 8') varie, et l'écran (8, 8') se déplace en translation.

2. Système d'écran selon la revendication 1, dans lequel l'écran comprend une première partie d'écran (8) et une seconde partie d'écran (8') qui sont interconnectées au moyen d'un tube de torsion (6), dans lequel le tube de torsion (6) est configuré pour tourner de manière à enrouler les première et seconde parties d'écran (8, 8') sur le tube de torsion (6) et à le maintenir tendu.

3. Système d'écran selon la revendication 2, dans lequel la première partie d'écran (8) et la seconde partie d'écran (8') sont enroulées simultanément l'une sur l'autre.

4. Système d'écran selon la revendication 2 ou 3, comprenant en outre un ressort de torsion pour placer le mouvement de rotation du tube de torsion (6) sous tension de ressort.

5. Système d'écran selon la revendication 4, dans lequel une première extrémité du ressort de torsion (10) est connectée au tube de torsion et dans lequel une seconde extrémité du ressort de torsion (10) est connectée à un second point de fixation fixe en rotation.

6. Système d'écran selon la revendication 5, dans lequel le second point de fixation fixe en rotation comporte un élément de guidage fixe (11A) par rapport auquel ou dans lequel la seconde extrémité du ressort de torsion (10) ne peut se déplacer qu'en translation.

7. Système d'écran selon l'une quelconque des revendications 2 à 6, dans lequel la première partie d'écran (8) est connectée à une première extrémité au premier point de fixation (5) et à une seconde extrémité au tube de torsion (10), et dans lequel la seconde partie d'écran (8') est connectée à une première extrémité au tube de torsion (6) et à une seconde extrémité au premier câble de traction mobile (9).

8. Système d'écran selon la revendication 7, dans lequel la première partie d'écran (8) enveloppe le tube de torsion (6) sur un côté du tube de torsion (6) tourné à l'opposé du premier câble de traction mobile (9) et dans lequel la seconde partie d'écran (8') enveloppe le tube de torsion (6) sur un côté du tube de torsion (6) tourné vers le premier câble de traction mobile (9).

9. Système d'écran selon l'une quelconque des revendications 2 à 8, dans lequel la première et/ou la seconde partie d'écran (8, 8') comporte une cellule photovoltaïque.

10. Système d'écran selon l'une des revendications 1 à 9, dans lequel une pluralité d'écrans, chacun tel que défini dans les revendications précédentes, est fixée à un premier ou un second câble de traction mobile (9, 9').

11. Système d'écran selon l'une des revendications 1 à 10, dans lequel un premier et/ou un second câble de traction mobile (9, 9') fait partie d'une pluralité de câbles de traction.

12. Système d'écran selon l'une des revendications 1 à 11, dans lequel un premier ou un second câble de traction mobile (9, 9') est fixé par une première extrémité de celui-ci à ou autour d'une bobine rotative et par une seconde extrémité de celui-ci à ou autour d'une seconde bobine rotative et dans lequel la première et/ou la seconde bobine rotative, mises en mouvement par l'un des premier et second moteurs (13, 13'), tournent de manière synchrone.

13. Bâtiment (19), tel qu'une serre, comprenant :
une ou plusieurs ouvertures perméables à la lumière (16), telles que des fenêtres ;
le système d'écran selon l'une quelconque des revendications 1 à 12 pour commander une quantité de lumière qui passe à travers les une ou plusieurs ouvertures perméables à la lumière dans le bâtiment.
